Europäisches Patentamt

European Patent Office

Office européen des brevets

(19)

(11) Veröffentlichungsnummer: **0 059 846**
**A2**

(12) # EUROPÄISCHE PATENTANMELDUNG

(21) Anmeldenummer: **82100922.2**

(22) Anmeldetag: **09.02.82**

(51) Int. Cl.$^3$: **C 07 F 7/20**

(30) Priorität: **05.03.81 DE 3108235**

(43) Veröffentlichungstag der Anmeldung:
**15.09.82** Patentblatt **82/37**

(84) Benannte Vertragsstaaten:
**AT BE CH FR GB IT LI NL SE**

(71) Anmelder: **DYNAMIT NOBEL AKTIENGESELLSCHAFT**
**Patentabteilung Postfach 1209**
**D-5210 Troisdorf, Bez. Köln(DE)**

(72) Erfinder: **Kötzsch, Hans-Joachim, Dr.**
**Fecampring 28**
**D-7888 Rheinfelden(DE)**

(72) Erfinder: **Vahlensieck, Hans-Joachim, Dr.**
**Im Habiken 2**
**D-7867 Wehr(DE)**

(54) **Verfahren zur Reinigung von Hexamethyldisiloxan und die dabei anfallenden azeotropen Gemische.**

(57) Gegenstand der vorliegenden Erfindung ist ein Verfahren zur Reinigung von Hexamethylsisiloxan, das durch Toluol oder andere Lösungsmittel, die sich destillativ nicht vollständig von Hexamethyldisiloxan abtrennen lassen, verunreinigt ist. Das Verfahren läßt sich in gleicher Weise zur Reinigung von Hexamethyldisiloxan einsetzen, das durch andere Substanzen verunreinigt ist. Es basiert auf der Tatsache, daß Hexamethyldisiloxan mit Acetonitril ein bisher unbekanntes Azeotrop bildet. Dieses Azeotrop bildet eine schwerere, acetonitrilreiche Phase und eine leichtere, hexamethyldisiloxanreiche Phase, die miteinander nicht mischbar sind. Dieses Azeotrop siedet bereits bei 71,4°C und ermöglicht auf diese Weise eine Abtrennung von Hexamethyldisiloxan bei relativ niedrigen Temperaturen von seinen Verunreinigungen. Man führt dazu eine oder mehrere Schleppdestillationen in Gegenwart von überschüssigem Acetonitril durch und trennt das Acetonitril aus der dabei anfallenden leichteren Phase wieder destillativ ab. In Erfüllung der gestellten Aufgabe wurden neben dem oben genannten azeotropen System auch noch ein azeotropes System aus Hexamethyldisiloxan und Toluol sowie ein weiteres aus Acetonitril und Toluol gefunden. Alle drei azeotropen Systeme sind ebenfalls Gegenstand der vorliegenden Erfindung.

EP 0 059 846 A2

- 1 -

Troisdorf, den 16.2.1981
OZ:81013 (4029) Dr.Sk/Ce

DYNAMIT NOBEL AKTIENGESELLSCHAFT
Troisdorf, Bez. Köln

Verfahren zur Reinigung von Hexamethyldisiloxan und die dabei anfallenden azeotropen Gemische

Gegenstand der vorliegenden Erfindung ist ein Verfahren zur Reinigung von Hexamethyldisiloxan. Bevorzugt wird das Verfahren zur Reinigung eines solchen Hexamethyldisiloxans eingesetzt, das durch Verbindungen verunreinigt ist, die sich destillativ nicht vollständig von Hexamethyldisiloxan abtrennen lassen. Gegenstand der Erfindung sind weiterhin die bei diesen Verfahren anfallenden azeotropen Gemische.

Die industrielle Herstellung semisynthetischer Penicilline liefert als Zwangsanfall in erheblicher Menge homogene Gemische von Hexamethyldisiloxan und Toluol. Das Siloxan stammt aus den abgespaltenen Schutzgruppen, mit denen die Penicillin-Vorstufen während der Synthese-Operation geschützt werden müssen, während das Toluol in solchen Verfahren als Lösungsmittel verwendet wird.

- 2 -

Beide Stoffe sind wertvolle Grundchemikalien, deren weitere Verwertung naheliegt: Außer der erforderlichen Rückführung als Lösungsmittel dient das Toluol beispielsweise als Ausgangsstoff für viele wichtige industrielle Sulfurierungs-, Nitrierungs-, Halogenierungs-, Oxidations- und Kupplungsprodukte in der Aromatenchemie, während das Hexamethyldisiloxan beispielsweise in der Silikonchemie zur Einführung von Trimethylsilylendgruppen und zur wasserfreien Verseifung von aromatischen Halogenmethylgruppen unter Bildung des schwer zugänglichen und wertvollen Trimethylchlorsilans großtechnisch verwendet wird.

Für die meisten Verwendungszwecke zur Nutzung jeweils einer Komponente ist das Siloxan-Toluol-Gemisch jedoch nicht einsetzbar, weil sich die Gegenwart der jeweils anderen Komponente störend auswirkt: Beispielsweise gibt Toluol bei der Siloxanspaltung zu Trimethylchlorsilan mit Hilfe von Chlormethylaromaten Anlaß zu höchst unerwünschten Nebenreaktionen nach Friedel-Crafts, die zu erheblichen Ausbeuteminderungen und Stoffverlusten auf seiten der aromatischen Produkte führen.

Die destillative Trennung von Toluol und Hexamethyldisiloxan bereitete bisher stets Schwierigkeiten: Einmal liegen die Siedepunkte nur ca. 10 $^\circ$C auseinander und zum anderen wurde selbst in sehr stufenreichen Kolonnen noch nie ein reines Hexamethyldisiloxan erhalten, sondern stets ein solches, das einen Restgehalt an Toluol hartnäckig beibehielt. Außerdem bestand bei der direkten destillativen Trennung die Gefahr, daß weitere Verunreinigungen z.B. N- und S-haltige Verbindungen von Hexamethyldisiloxan bei dessen Destillation bei 100 $^\circ$C mitgerissen wurden, so daß auch das Destillat solche Verunreinigungen enthalten konnte. Es bestand deshalb die Aufgabe, Hexamethyldisiloxan in reiner Form zu erhalten, wobei als Ausgangsprodukt ein Hexamethyldisiloxan eingesetzt wird, das durch Toluol und/ oder andere analoge Lösungsmittel und gegebenenfalls

- 3 -

durch Nebenprodukte, die bei der Herstellung semisynthetischer Penicilline anfallen, verunreinigt ist.

Die an sich naheliegende Reindarstellung von Hexamethyldisiloxan (und gegebenenfalls von Toluol) durch Anwendung einer Kolonne mit hoher Bodenzahl und großem Rücklaufverhältnis erwies sich als erfolglos. Dabei wurde ein bisher unbekanntes Toluol-Hexamethyldisiloxan-Azeotrop mit dem Siedepunkt 99,1 $^{o}$C, bestehend aus 1,4 % Toluol und 98,6 % Hexamethyldisiloxan aufgefunden. Die Tatsache dieses Azeotrops bestätigt, daß der Weg der Kolonnendestillation lediglich teilweise Trennungen und Anreicherungen gegen dieses Azeotrop ermöglicht und, wegen der in der Praxis in der Regel höheren Ausgangskonzentrationen an Toluol, das Hexamethyldisiloxan praktisch ausschließlich in Form des Azeotrops erhalten wurde.

In Erfüllung der oben genannten Aufgabe wurde nun gefunden, daß die geschilderten Schwierigkeiten bei der Abtrennung von Hexamethyldisiloxan aus Gemischen, die dieses zusammen mit Toluol und/oder anderen Lösungsmitteln und gegebenenfalls anderen Verunreinigungen enthalten, in einfacher Weise dadurch zu beheben ist, indem man das Hexamethyldisiloxan als Azeotrop mit Acetonitril abdestilliert, aus diesem Azeotrop die spezifisch leichtere Phase abtrennt und daraus das Hexamethyldisiloxan nach destillativer Abtrennung des Acetonitrils gewinnt.

Das erfindungsgemäße Verfahren basiert auf der Tatsache, daß Acetonitril zwei weitere, bislang unbekannte Azeotrope bildet, die ebenfalls in Erfüllung der oben genannten Aufgabe gefunden wurden:

1. Das Hexamethyldisiloxan-Acetonitril-Azeotrop (I) aus ca. 63,5 % Hexamethyldisiloxan und aus ca. 36,5 % Acetonitril besteht, das bei Normaldruck bei 71,4 $^{o}$C siedet

- 4 -

und sich überraschend in zwei flüssige, nicht miteinander mischbare, Phasen trennt. Die obere, leichtere Phase (II) besteht aus ca. 95 % Hexamethyldisiloxan und aus ca. 5 % Acetonitril und besitzt die Dichte $D_4^{20}$ = 0,764; die untere, schwerere Phase (III) besteht aus ca. 10 % Hexamethyldisiloxan und aus 90 % Acetonitril und besitzt die Dichte $D_4^{20}$ = 0,782.

2. Das Toluol-Acetonitril-Azeotrop (IV), das bei Normaldruck aus 14,4 % Toluol und aus 85,6 % Acetonitril besteht, bei 80,5 °C siedet und eine Dichte $D_4^{20}$ = 0,798 besitzt. (Alle Prozentangaben sind in Gew.-% angegeben).

Erfindungsgemäß wird nun dem verunreinigten Hexamethyldisiloxan so viel Acetonitril hinzugefügt, daß sich die beiden azeotropen Gemische bilden können. Aus dem Gemisch läßt sich dann das Azeotrop Hexamethyldisiloxan/Aectonitril (I) abdestillieren, ggf. nach vorhergehender destillativer Abtrennung noch niedriger siedende Verunreinigungen. Dieses Azeotrop trennt sich nach der Abdestillation in die beiden Phasen II und III. Diese beiden Phasen lassen sich auf an sich bekannte Weise leicht trennen.
Aus der Phase II wird reines Hexamethyldisiloxan in der Weise gewonnen, daß daraus Acetonitril abdestilliert wird. Dieses geht überwiegend als Azeotrop mit Hexamethyldisiloxan (I) über und im Rückstand verbleibt reines Hexamethyldisiloxan, das für neue Synthesen wieder eingesetzt werden kann. Gegebenenfalls kann es einer fraktionierten Destillation zur Feinstreinigung unterworfen werden.

Die erfindungsgemäße Reinigung läßt sich auch kontinuierlich durchführen, indem das Acetonitril im Kreislauf geführt wird. Dies geschieht zweckmäßigerweise so, daß das Destillat, das aus der Phase II bei der Reinherstellung des Hexamethyldisiloxans abdestilliert wird, mit der Phase I, die bei der Destillation des verunreinigten Hexamethyldisiloxans anfällt, kombiniert wird. Aus diesem Gemisch wird die leichtere, hexamethyldisiloxanreiche, Phase II kontinuierlich, gegebenenfalls über eine Schleuse oder ein Zwischengefäß, der Enddestillation zugeführt, während die schwerere , acetonitrilreiche Phase III kontinuierlich dem verunreinigten Ausgangsgemisch hinzugefügt wird und dort zur Bildung des abzudestillierenden Azeotrops I eingesetzt wird. In dieser Destillationsblase reichern sich die Verunreinigungen im Laufe des Verfahrens an; sie können jedoch leicht, auf an sich bekannte Weise, von Zeit zu Zeit abgezogen werden. Wenn die Verunreinigung überwiegend aus Toluol oder einem analogen Lösungsmittel bestehen, ist es bei der kontinuierlichen Arbeitsweise nach Anreicherung des Lösungsmittels von Vorteil, die Zuführung von Acetonitril zu dem Gemisch aus Hexamethyldisiloxan und den Verunreinigungen zu unterbrechen und in einer Zwischenfraktion Hexamethyldisiloxan und Lösungsmittel abzudestillieren bis reines Lösungsmittel überdestilliert. Dieses Destillat wird vorzugsweise in der gleichen Vorlage aufgefangen, aus der bei der kontinuierlichen Arbeitsweise das verunreinigte Hexamethyldisiloxan zugeführt wird. Nach Abtrennung des Hexamethyldisiloxans zusammen mit einem Teil des Lösungsmittels können der Rest des Lösungsmittels sowie ggf. die weiteren, höher siedenden Verunreinigungen dann direkt aus der Destillationsblase abgezogen werden.

Die praktische Durchführung des erfindungsgemäßen Reinigungsverfahrens wird z.B. gemäß beigefügtem Fließbild durchgeführt. Dazu wird über eine Vorlage 1 ein zu trennendes Siloxan-Toluol-Gemisch A (z.B. 15 % Toluol enthaltendes Hexamethyldisiloxan, $[(Me_3Si)_2O]$ ,) oder aber beispielsweise auch das Hexamethyldisiloxan-Toluol-Azeotrop selbst in die Kolonnenblase 2 eingebracht und zu Beginn eine für den Umlauf in der Anlage ausreichende Menge Acetonitril (MeCN) über die mit MeCN gekennzeichnete

Leitung ebenfalls in Blase 2 gepumpt. Dann wird mit Rücklaufverhältnissen von vorzugsweise 1 bis 8 die Destillation von Azeotrop I über die Kolonne 3 (mit z.B. 20 bis 45 theoretischen Böden) in die als Phasenabscheider ausgebildete Vorlage 4 aufgenommen, wo sich I in die leichte, acetonitrilarme Phase II (oben) und in die hexamethyldisiloxanarme Phase III (unten) scheidet. II fließt über eine Vorlage 5 in die Kolonnenblase 6. Aus der mit II gefüllten Blase 6 wird über Kolonne 7 das Azeotrop I abdestilliert, bis das Produkt in 6 kein Acetonitril mehr enthält (dies ist nach Abdestillieren von etwa 15 bis 20 % der Fall) und als reines Hexamethyldisiloxan abgelassen wird. Dabei kann die Kolonne 7 gegebenenfalls als vollkontinuierliche Destillation gestaltet werden. Das Kopfprodukt I von Kolonne 7 wird ebenfalls zur Vorlage 4 geführt. Die sich in Vorlage 4 ständig abscheidende, untere Phase III fließt über Leitung 8 in Blase 2 zurück. Die Füllung der Blase 2 wird während der Destillation ständig aus Vorlage 1 ergänzt. Sobald Blase 2 schließlich fast vollständig mit Toluol angefüllt ist, wird zunächst die Rückführung von III über Leitung 8, danach auch die Zufuhr von toluolhaltigem Hexamethyldisiloxan aus Vorlage 1 gestopt und Acetonitril- und Hexamethyldisiloxanrest aus Blase 2 in kurzen, gegebenenfalls toluolhaltigen Destillatfraktionen in Vorlage 1 zurückgeführt, bis das Toluol in Blase 2 davon frei ist und rein abgezogen werden kann. Die Kolonne 3 und 7 sowie die Vorlagen 1 und 4 sind durch eine gemeinsame Atemleitung 9 mit der Außen-Atmosphäre verbunden. Das erfindungsgemäße Verfahren eignet sich nicht nur zur Reinigung von Hexamethyldisiloxan aus toluolhaltigen Lösungen, wie sie bei der Aufarbeitung von Rückständen bei der Herstellung semisynthetischer Penicilline anfallen. Es kann in gleicher Weise eingesetzt werden, wenn Hexamethyldisiloxan durch andere Substanzen verunreinigt ist, von denen es durch direkte destillative Trennung nicht befreit werden kann. So ist es z.B. einsetzbar bei

- 7 -

der Abtrennung von Verunreinigungen, die etwa den gleichen Siedepunkt wie Hexamethyldisiloxan besitzen oder die sich bei der Siedetemperatur des Hexamethyldisiloxans zersetzen.

Ein besonderer Vorteil der erfindungsgemäßen azeotropen Reinigungsmethoden ist ihre Selektivität: Technisches Hexamethyldisiloxan enthält häufig schwefel- und/oder stickstoffhaltige Spurenverunreinigungen, die nach Anwendung der erfindungsgemäßen azeotropen Reinigungsmethode quantitativ im Toluol verbleiben, während das destillierende Azeotrop keinerlei Verunreinigungen mit sich führt und so die Gewinnung eines absolut reinen Hexamethyldisiloxans ermöglicht, das auch die strengen Reinheitsanforderungen der pharmazeutischen und kosmetischen Anwendung erfüllt.

Beispiel 1
In einer Labor-Destillationskolonne mit 4 Liter-Blase, 25 mm Kolonnendurchmesser, 2200 mm Füllhöhe (Füllung: 4 mm-Porzellansättel) und automatischem Kolonnenkopf wird ein Gemisch aus 650 g Acetonitril, 1300 g Hexamethyldisiloxan und 1000 g Toluol sorgfältig fraktioniert bei Rücklaufverhältnis 8:

1. Fraktion: <u>1712 g Hexamethyldisiloxan-Acetonitril-</u>
<u>Azeotrop (I)</u>

94,8 % Ausbeute,
Kp. 71,4 $^{\circ}$C, zwei flüssige Phasen,
63,5 % obere Phase (II): ca. 95 % Hexamethyldisiloxan + ca. 5 % Acetonitril
$D_4^{20}$ 0,764; $n_D^{25}$ 1,3750

36,5 % untere Phase (III): ca. 90 % Acetonitril
$D_4^{20}$ 0,782; $n_D^{25}$ 1,3482

- 8 -

2. Fraktion: <u>119 g Zwischenlauf</u> Kp. 71,4 °C - 99,1 °C
bestehend aus ca. 72 % Hexamethyldisiloxan,
ca. 37 % Acetonitril und
ca. 1 % Toluol

3. Fraktion: <u>88 g Toluol-Hexamethyldisiloxan-Azeotrop</u>
Kp. 99,1 °C, bestehend aus 98,6 % Hexamethyldisiloxan und 1,4 % Toluol
$D_4^{20}$ 0,765

4. Fraktion: <u>69 g Zwischenlauf</u> Kp. 99,1 °C - 110,5 °C
bestehend aus ca. 47 % Hexamethyldisiloxan und
ca. 53 % Toluol

Rückstand: ca. 950 g Toluol, frei von Hexamethyldisiloxan und Acetonitril.


<u>Beispiel 2</u>
Analog Beispiel 1 wird ein Gemisch aus 1000 g Acetonitril,
1000 g Hexamethyldisiloxan und 1000 g Toluol destilliert.

1. Fraktion: <u>1522 g Hexamethyldisiloxan-Acetonitril-</u>
<u>Azeotrop (I)</u>
95,9 % Ausbeute
Kp. 71,4 °C, bestehend aus den Phasen II u.III

2. Fraktion: <u>192 g Zwischenlauf</u> Kp. 71,4 °C - 80,5 °C
bestehend aus ca. 20 % Hexamethyldisiloxan
ca. 70 % Acetonitril und
ca. 10 % Toluol

3. Fraktion: <u>281 g Toluol-Acetonitril-Azeotrop (IV)</u>
Kp. 80,5 °C, bestehend aus 85,6 %
Acetonitril und 14,4 % Toluol
$D_4^{20}$ 0,798; $n_D^{25}$ 1,3692

- 9 -

4. Fraktion: <u>114 g Zwischenlauf</u> 80,5 °C - 110,5 °C
                bestehend aus ca. 48 % Acetonitril und
                                ca. 52 % Toluol

Rückstand: ca. 900 g Toluol, frei von Hexamethyldi-
                siloxan und Acetonitril.

<u>Beispiel 3</u>

In einer Labor-Kolonnendestillation mit theoretischen 12
Böden und 4 Liter-Blase werden 2000 g II (obere Phase der
in den Beispielen 1 und 2 erhaltenen ersten Fraktionen)
bei Rücklaufverhältnis 2 fraktioniert:

1. Fraktion: <u>267 g Hexamethyldisiloxan-Acetonitril-</u>
                <u>Azeotrop (I)</u>
                Kp. 71,4 °C

2. Fraktion: <u>21 g Zwischenlauf</u> Kp. 71,4 °C - 100 °C
                bestehend aus ca. 12 % Acetonitril und
                                ca. 88 % Hexamethyldisiloxan

Rückstand: ca. 1700 g Hexamethyldisiloxan, frei von
                Toluol und Acetonitril.

<u>Beispiel 4</u>

2500 g Hexamethyldisiloxan (Abfall aus der Cephalosporin-
Herstellung mit einem Gehalt an 1,64 % N,N-Dimethylanilin
und von 8 ppm Schwefel aus S-haltigen Verunreinigungen)
werden mit je 300 g Toluol und Acetonitril in der im Beispiel 1 beschriebenen Destillationseinrichtung bei Rücklaufverhältnis 2 und Kp. 71,4 °C sorgfältig fraktioniert.
Das Destillat wird in einer Vorlage aufgefangen, in der
es sich in eine leichtere, obere Phase (II) und eine
schwerere, untere Phase (III) auftrennt. Um stets in ausreichender Menge Acetonitril in der Destillationsblase
zur Verfügung zu halten, wird während der Destillation
über eine zu diesem Zweck installierte absperrbare Leitung vom Untenauslauf der Destillatvorlage zur Destillationsblase die aus 90 % Acetonitril bestehende untere Phase
(III) des in der Destillatvorlage aufgefangenen Destillats,
das aus dem Hexamethyldisiloxan-Acetonitril-Azeotrop (I)
besteht, kontinuierlich in die Destillationsblase zurückgeführt.

Als einzige Destillatfraktion werden schließlich 2480 g
aus 95 % Hexamethyldisiloxan bestehende obere Phase (II)
erhalten. Der Rückstand (ca. 600 g), bestehend aus ca.
28 % Acetonitril, ca. 49 % Toluol, noch ca. 16 % Hexamethyldisiloxan und ca. 7 % N,N-Dimethylanilin, ist mit
33,2 ppm S verunreinigt.

Die Destillation der 2480 g oberer Phase (II) des
Destillats ergibt ca. 385 g eines vorwiegend aus dem
Azeotrop I bestehenden Vorlaufs und ca. 2000 g hochreines
Hexamethyldisiloxan, das frei von Schwefel- und Stickstoffverunreinigungen ist.

Beispiel 5
Es wird in einer gemäß Fließbild gestalteten Laboranlage
gearbeitet. Die Anlage besteht aus einer Destillationsblase 2 in Form eines 4 Liter-Mehrhalskolbens (beheizt
mittels Heizhaube), ausgerüstet mit Innenthermometer,
Einleitungsrohr (als Acetonitril-Rückführung 8) und 1
Liter-Tropftrichter (als Vorlage 1 für Rohproduktzulauf
und Nachlauffraktion); Kolonne 3 (∅ 25 mm, Füllhöhe 2200
mm, Füllkörper 4 mm-Porzelansättel) mit Flüssigkeitsteilerkopf, Destillatvorlage 4, gestaltet als Phasenabscheider: 1000 ml-Tropftrichter mit zwei Destillat-Einleitungsrohren von den Kolonnen 3 und 7 her kommend bis
ca. 500 ml Füllhöhe eintauchend, Untenauslauf in die
Acetonitrilrückführung 8, sowie separat beatmetes Überlaufrohr zur Vorlage 5); Überlaufvorlage 5 (1 Liter-Tropftrichter) mit Auslaufleitung in den Mitteleinlauf der hier kontinuierliche betriebenen Kolonne 7, deren Kopfprodukt ebenfalls in die Vorlage 4 geleitet wird, und
deren Destillationsblase ebenfalls aus einem beheizbaren
4 Liter-Mehrhalskolben besteht, der zusätzlich mit als
kommunizierendes Rohr ausgebildetem Überlauf für das
darin anfallende reine Hexamethyldisiloxan ausgerüstet
ist.

In Destillationsblase 2 werden vor Beginn des Versuchs
ca. 500 g Acetonitril vorgelegt und über Vorlage 1 während
der Destillation mit Rücklaufverhältnis 2 nach und nach
ca. 19 kg Abfall-Hexamethyldisiloxan (ca. 15 % Toluol
und 68 ppm Organo-S-Verunreinigungen enthaltend) aus der
Penicillin-Chemie so lange eingespeist, bis die Blase 2
mit Toluol angefüllt ist. Aus Blase 2 destilliert über
Kolonne 3 bei der Kopftemperatur 71,4 $^\circ$C das Hexamethyl-
disiloxan-Acetonitril-Azeotrop I in die Vorlage 4, in der
sich I in die zwei flüssigen Phasen II (obere Phase: 95 %
$(Me_3Si)_2O$ + 5 % MeCN) und III (untere Phase: 10 %
$(Me_3Si)_2O$ + 90 % MeCN) trennt. Die untere Phase III wird
kontinuierlich in die Blase 2 zurückgeführt, so daß dem
System kein zusätzliches frisches Acetonitril zugesetzt
werden muß. Die obere Phase II fließt kontinuierlich über
in die Vorlage 5, von der aus kontinuierlich die Kolonne 7
beschickt wird, aus der beim Rücklaufverhältnis 2 und
einer Kopftemperatur von 71,4 $^\circ$C ebenfalls das Azeotrop I
in die (ca. 16 - 17 % der der Kolonne zufließenden Produktmenge) Vorlage 4 destilliert wird. Aus dem Überlauf
der Blase 6 wird kontinuierlich das hochreine Hexamethyldisiloxan entnommen.

Nach Zuführung der insgesamt ca. 18,8 kg Ausgangsmaterial
wird bei voller Blase 2 die Acetonitril-Rückführung 8 geschlossen, so daß sich das nahezu gesamte im System anwesende Acetonitril in Form der unteren Phase III in Vorlage 4 ansammelt. Währenddessen werden der Blase weitere ca. 1,2 kg Ausgangsgemisch über Vorlage 1 zugeführt, bis sich nahezu kein Acetonitril mehr in der Kolonne 3 befindet.

Dann wird von Vorlage 4 auf Vorlage 1 umgestellt und bei von 71,4 °C auf 110,5 °C ansteigendem Siedepunkt ein Zwischenlauf von ca. 550 g in Vorlage 1 destilliert (zur Wiederverwendung); bei Kp. 110,5 °C und Rücklaufstellung des Kolonnenkopfes werden aus der Blase 2 ca. 3 kg Toluol entleert. Kolonne 3 kann anschließend nach Neubefüllung der Blase 2 aus Vorlage 1 und der acetonitrilhaltigen unteren Phase III aus Vorlage 4 und kurzer Reinigungsdestillation auf Vorlage 1 wieder mit reinem Azeotrop I als Kopfprodukt für Vorlage 4 den Betrieb fortsetzen wie vorstehend beschrieben.

Während acht derartigen Cyclen der Kolonne 3 bei durchgehend kontinuierlichem Betrieb der Kolonne 7 werden ca. 160 kg Abfall-Hexamethyldisiloxan mit einem Gehalt von 68 ppm Organo-Schwefel-Verunreinigung und ca. 15 % Toluol in Gegenwart von nur 500 g Acetonitril, die ständig zwischen Blase 2, Vorlage 4 und Kolonne 7 umlaufen, aufgearbeitet. Erhalten wurden ca. 136 kg Hexamethyldisiloxan (Kp. 100 °C, hochrein, frei von Toluol und S- und N-haltigen Verunreinigungen) und ca. 24 kg Toluol technischer Qualität mit einem Gehalt von ca. 424 ppm organisch gebundenen Schwefels und ca. 132 ppm organisch gebundenen Stickstoffs.

Troisdorf, den 16.2.1981
OZ: 81013 (4029) Dr.Sk/Ce

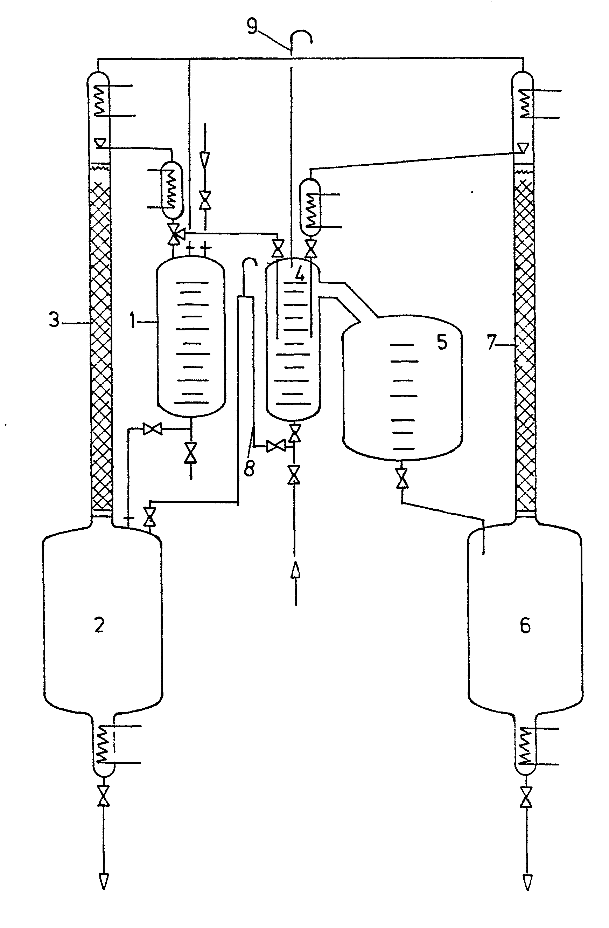

Patentansprüche:

1. Verfahren zur Reinigung von Hexamethyldisiloxan, d a - d u r c h   g e k e n n z e i c h n e t , daß man Hexamethyldisiloxan als Azeotrop mit Acetonitril abdestilliert, aus diesem Azeotrop die darin enthaltene spezifisch leichtere Phase abtrennt und nach erfolgter Abtrennung daraus das Hexamethyldisiloxan nach destillativer Abtrennung des Acetonitrils gewinnt.

2. Verfahren gemäß Anspruch 1, dadurch gekennzeichnet, daß man die spezifisch schwerere Phase des Azeotrops aus Hexamethyldisiloxan und Acetonitril als eines der Ausgangsstoffe zur Bildung des Azeotrops Hexamethyldisiloxan/Acetonitril einsetzt.

3. Verfahren gemäß Anspruch 1, dadurch gekennzeichnet, daß man das bei der destillativen Abtrennung des Acetonitrils aus der spezifisch leichteren Phase des Azeotrops Acetonitril/Hexamethyldisiloxan erhaltene acetonitrilhaltige Destillat in den Verfahrensprozeß an geeigneter Stelle wieder einführt.

4. Verfahren zur kontinuierlichen Reinigung von Hexamethyldisiloxan nach Ansprüchen 1 bis 3, dadurch gekennzeichnet, daß man in einer Destillationsblase (1) das Azeotrop Hexamethyldisiloxan/Acetonitril erzeugt und dieses durch fraktionierte Destillation über eine Kolonne (3) in einen Abscheider (4) überführt, aus dem man die leichtere Phase über eine Vorlage (5) in eine Destillierblase (6) überlaufen läßt, in der aus dieser leichteren Phase das Acetonitril in Form seines Azeotrops mit Hexamethyldisiloxan durch fraktionierte

- 2 -

Destillation über die Kolonne (7) ausgetrieben und in den Abscheider (4) überführt wird, aus dem die spezifisch schwerere Phase der Destillationsblase (2) über Leitung (8) zugeführt wird.

5. Verfahren gemäß Anspruch 4, dadurch gekennzeichnet, daß nach Anreicherung der Verunreinigungen in der Destillationsblase (2) die Zuführung von (4) nach (2) geschlossen wird und die Destillationskolonne (3) mit dem Vorratsbehälter (1) verbunden wird und über die Kolonne (3) eine hexamethyldisiloxanhaltige Zwischenfraktion in den Vorratsbehälter (1) überdestilliert wird, wo diese Zwischenfraktion so lange aufbewahrt wird, bis kein Hexamethyldisiloxan übergeht und daraufhin der Rest der Verunreinigung aus dem Behälter (2) abgezogen wird.

6. Azeotropes System der Gesamtzusammensetzung von ca. 63,5 % Hexamethyldisiloxan und ca. 36,5 % Acetronitril und dem Siedepunkt 71,4 $^{\circ}$C.

7. Azeotropes System gemäß Anspruch 6, dadurch gekennzeichnet, daß es aus zwei nicht miteinander mischbaren flüssigen Phasen besteht, wobei die leichtere Phase eine Dichte $D_4^{20}$ von 0,764 und eine Zusammensetzung von ca. 95 % Hexamethyldisiloxan und ca. 5 % Acetonitril besitzt, während die schwerere Phase eine Dichte $D_4^{20}$ von 0,782 und eine Zusammensetzung von ca. 10 % Hexamethyldisiloxan und ca. 90 % Acetonitril besitzt.

3. Azeotropes System mit dem Siedepunkt 99,1 $^{\circ}$C, bestehend aus 93,6 % Hexamethyldisiloxan und 1,4 % Toluol.

9. Azeotropes System mit dem Siedepunkt 80,5 $^{\circ}$C, bestehend aus 35,6 % Acetonitril und 14,4 % Toluol sowie der Dichte $D_4^{20}$ von 0,798.